# EUROPÄISCHE PATENTSCHRIFT

(11) **EP 3 907 744 B1**
(45) Veröffentlichungstag und Bekanntmachung des Hinweises auf die Patenterteilung: **22.05.2024**
(21) Anmeldenummer: 21161531.5
(22) Anmeldetag: 09.03.2021
(51) Int. Cl.: H01B 7/06, H02G 9/02, H02G 11/00, H01B 7/04

(54) **VORRICHTUNG ZUM AUSGLEICH DER LÄNGENÄNDERUNG EINER FLEXIBLEN LEITUNG SOWIE EINE OFFSHORE-EINRICHTUNG MIT EINER SOLCHEN VORRICHTUNG**
DEVICE FOR COMPENSATING FOR THE CHANGE IN LENGTH OF A FLEXIBLE LINE AND AN OFFSHORE FACILITY COMPRISING SUCH A DEVICE
DISPOSITIF DE COMPENSATION DU CHANGEMENT DE LONGUEUR D'UN TUYAU FLEXIBLE, AINSI QU'INSTALLATION EN MER DOTÉE D'UN TEL DISPOSITIF

(30) Priorität: 05.05.2020 DE 102020112088
(43) Veröffentlichungstag der Anmeldung: 10.11.2021
(73) Patentinhaber: TenneT TSO GmbH, 95448 Bayreuth (DE)
(72) Erfinder: Löbermann, Matthias, 31515 Wunstorf (DE)
(74) Vertreter: Scheffler, Jörg

(56) Entgegenhaltungen:
- WO-A1-2010/107316
- DE-A1- 3 224 976
- DE-A1- 19 538 392
- DE-C1- 19 614 060
- DE-C2- 19 614 427
- DE-U1-202017 106 471

## Beschreibung

Die Erfindung betrifft eine für den Einsatz im Unterwasserbereich bestimmte Vorrichtung zum Ausgleich einer Längenänderung einer flexiblen Leitung zwischen einer kompakten und einer gestreckten Gebrauchsposition, welche mit einem Element insbesondere elektrisch kontaktierbar ist. Weiterhin betrifft die Erfindung noch eine stationäre Offshore-Einrichtung mit einer solchen Vorrichtung.

Es bestehen derzeit Überlegung im Offshore-Bereich, insbesondere bei Offshore-Netzanschlusssystemen, Abwärme produzierende elektrische Elemente der Leistungselektronik im Unterwasserbereich zu positionieren, um so eine weitgehend gleichbleibende Temperatur und eine problemlose Wärmeabfuhr zu realisieren.

Als problematisch hat es sich in der Praxis erwiesen, die getauchten Elemente und deren Behälter bei angeschlossener Leitung zur Anbindung enthaltener elektrischer Leistungselektronik für Inspektions- und Wartungszwecke des getauchten Elements ohne Einschränkung der Haltbarkeit der Leitung, der Behinderung oder Gefährdung umliegender Arbeitsschiffe sowie ohne den Zwang, das Seekabel von der Leistungselektronik aufnehmenden Struktur trennen zu müssen, zwischen einer getauchten kompakten Gebrauchsposition und einer gestreckten Gebrauchsposition der Leitung im Überwasserbereich zu bewegen.

Der gegenwärtige Stand der Technik sieht zur Lösung dieser Aufgabe einen sich als Raumdiagonale ausbildenden Leitungsstreckenabschnitt vor, wenn die Elemente der Leistungselektronik aufnehmenden Struktur sich im aufgetauchten Zustand befinden.

Ein wirtschaftlicher Nachteil besteht darin, dass das Auftauchen der Struktur in einem nur begrenzt freischwojenden Winkelsektor stattfinden kann, der erheblich von Wellenrichtung und auch Wellenhöhe abhängig ist. Dieses wiederum stellt eine Einschränkung in der zeitlichen Zugänglichkeit dar und kann bei einem Systemausfall Verfügbarkeitseinbußen nach sich ziehen.

Es wäre selbstverständlich naheliegend, die Vorrichtung mit einer Haspel oder Wickeltrommel für die flexible Leitung auszustatten, um durch Auf- oder Abwickeln die jeweils erforderliche Leitungslänge bereitstellen zu können und so den Ausgleich der Längenänderung zu realisieren. Allerdings sind in der kompakten Gebrauchsposition neben den kontaktierenden Elementen auch alle Bestandteile der Vorrichtung überwiegend getaucht. In der Praxis kommt es bei einer Haspel oder Wickeltrommel neben Korrosionen auch schnell zu unerwünschtem Bewuchs oder Besiedelung durch marine Lebewesen, sodass die Funktionsbereitschaft eingeschränkt sein kann. Mit Funktionsausfällen muss daher jederzeit gerechnet werden.

Hierzu ist eine Kabeltrommel gemäß der EP 33 164 29 B1 im Bereich einer drehbar auf einem Lagerzapfen gelagerten Kabelspule abgedichtet, um dadurch Voraussetzungen für eine erhöhte Wasserdichtheit zu schaffen. Dabei ist ein Technikraum gegenüber dem Lagerzapfen und gegenüber der Abdeckung druckwasserdicht abgedichtet, wobei zusätzlich die zumindest eine Steckdose und ein Stecker an einem diese verbindenden Kabel druckwasserdicht ausgebildet sind.

Die DE 32 24 976 C2 bezieht sich auf einen Windenergiekonverter im Offshore-Bereich. Von einer schwimmenden Plattform wird das Seekabel in großen Spiralen, die die vertikalen und horizontalen Bewegungen der Plattform auffangen, einem Unterwasser-Verankerungskörper zugeführt, an dem das Seekabel befestigt ist. Eine verwindungs- und spannungsfreie Verbindung des Seekabels mit der Plattform, um das Seekabel nicht zu verdrehen, wird durch die Verwendung einer Schleifringanlage erreicht, sodass sich die Plattform frei drehen kann, während das Seekabel nicht verdreht wird.

Aus der DE 38 33 488 C2 ist ein Unterwasser-Ölübernahme-System bekannt, bei dem von einer Winde an Bord eines Tankers ein Schlauch abgewickelt wird, wobei eine Seegangskompensation an der Winde vorgesehen ist. Dabei wird der Schlauch in vertikalen oder horizontalen Ebenen spiralförmig auf einer zylindrischen Trommel gespeichert.

Die DE 195 38 392 A1 beschreibt eine Vorrichtung bei einer Textilmaschine zum Ablegen von Spulen auf Paletten. Zur Energieversorgung sowie zur Signalübermittlung eines Handhabungsgeräts sind Leitungen vorgesehen, die zur Unterdrückung der von den jeweiligen Leitungen erzeugten Drehmomente beim Heben und Senken des Handhabungsgeräts als ineinander verlegte und mit gegenläufiger Steigung versehene Wendelleitungen ausgeführt sind. Das Handhabungsgerät hängt an vier Flachbändern, die einen spitzen Winkel einschließen und so gekoppelt sind, dass die Wickeltrommeln für die Bänder gleichzeitig in derselben Richtung mit derselben Geschwindigkeit angetrieben werden. Die Wendelleitungen sind zwischen diesen Bändern eingeschlossen.

Ferner offenbart die DE 196 14 427 C2 einen Koppelverbinder für die elektrische Energieübertragung mit konzentrisch zueinander angeordneten Wendeln, die unterschiedliche Durchmesser aufweisen und einen gegenläufigen Wicklungssinn besitzen können.

Eine ähnliche, für Fahrzeuge bestimmte Kupplungseinrichtung mit einer spiral- oder wendelförmigen Gestaltung ist auch aus der DE 196 14 060 C1 sowie der DE 10 2014 218 944 A1 bekannt.

Schließlich betrifft die DE 20 2017 106 471 U1 ein Stranggutsystem mit einem in mehreren Windungen verlaufenden Kabel, welches bei nachlassender Zugkraft selbsttätig wieder in die ursprüngliche Form zurückkehrt, und die DE 1 098 303 A einen in Windungen gelegten Schlauch.

Man könnte daran denken, teleskopierbare Leitungsabschnitte vorzusehen oder die Leitung mittels einer Kinematik zu führen, um die Längenänderung auszugleichen. Aus den genannten Gründen ist allerdings auch hierbei die Funktionsbereitschaft nicht zuverlässig gegeben.

Der Erfindung liegt die Aufgabe zugrunde, eine Möglichkeit zu schaffen, den Wechsel der flexiblen Leitung zwischen der kompakten und der gestreckten Gebrauchsposition kontrolliert in einem definierten Arbeitsraum und zugleich ohne drehbewegliche oder schiebebewegliche Elemente im Unterwasserbereich zu realisieren.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei der die Leitung eine gerade Anzahl von elastisch verformbaren Spiralleitungen aufweist, wobei jede Spiralleitung aus einer jeweiligen Wicklung mit mehreren vorgeformten Windungen besteht, die entgegen einer Rückstellkraft relativ zueinander und/oder aus ihrer jeweiligen vorgeformten Ringform zur Abstandsänderung benachbarter Windungen elastisch auslenkbar sind, wobei zumindest zwei Spiralleitungen eine gegensinnige Steigung aufweisen, und die Wicklungen verschiedener Spiralleitungen koaxial zueinander angeordnet sind. Erfindungsgemäß handelt es sich um ein auf dem Meeresgrund absenkbare und im Gebrauch stationäre Vorrichtung, an der paarweise zumindest zwei Leitungen als Zu- und/oder Ableitungen spiralförmig mit gegenläufiger Drehrichtung bzw. Steigung angeordnet sind. Durch die spiralförmige Anordnung kann bei Auftauchen der an die Leitungsenden angeschlossenen Leistungselektronik beinhaltenden Struktur/Behälter der Höhen-/Tiefenunterschied zwischen getauchtem und aufgetauchtem Zustand punktgenau erreicht werden, ohne dass die vorgenannten Einschränkungen auftreten können. Die entgegenlaufenden Spiralleitungen gegensinniger Steigung verhindern wirksam ein Verdrehen der Leitung und somit angeschlossener Anschlusselemente oder Behälter während des Hebens oder Absenkens, sodass der Arbeitsraum zylindrisch entsprechend der Hüllkurve der Wicklung entsprechend der maximalen Auslenkung der Windungen begrenzt ist. Vereinfacht gesagt ist die Leitung nach dem Prinzip von zwei oder mehr koaxialen Schraubenfedern als Zugfedern oder Druckfedern aufgebaut, die durch ihre gegensinnige Steigung gegensinnige Drehmomente neutralisieren, sodass die Leitung frei von äußeren Kräften ist und darüber hinaus sogar eine hohe Stabilität in beiden Gebrauchspositionen erreicht. Dabei kommt die Vorrichtung ohne drehbewegliche oder translatorische Haltemittel, insbesondere Wickeltrommeln, aus. Vielmehr beschränkt sich die erforderliche Beweglichkeit auf eine elastische Verformung der Leitung, deren Eigenschaften die kompakte Gebrauchsposition und die gestreckte Gebrauchsposition in reproduzierbarer Weise bestimmen, wobei die Leitung einen Längenausgleich zwischen der abgesenkten Position auf dem Meeresgrund und der Überwasserposition, beispielsweise zu Montage-, Kontaktierungs- oder Servicezwecken ermöglicht. Es ist also keine dauerhafte Überwasserstation vorhanden oder nötig, die eine Kabeltrommel tragen könnte. Damit entfallen auch Einschränkungen der Funktionsbereitschaft aufgrund von Bewuchs oder Korrosion beweglicher Teile.

Grundsätzlich wird dabei davon ausgegangen, dass die Spiralleitung aufgrund der elastischen Rückstellkraft die kompakte Gebrauchsposition einnehmen wird. Mithin zieht sich die Leitung also selbst zusammen, um so die gewünschte vordefinierte kompakte Gebrauchsposition zu erreichen. In der Praxis kann allerdings auch die gestreckte Gebrauchsposition der Ruheposition entsprechen, sodass die Leitung durch eine axiale Druckkraft entgegen der Rückstellkraft in die kompakte Gebrauchsposition beweglich ist. Hierzu kann es sinnvoll sein, wenn die Leitung durch eine beispielsweise hohlzylindrische Führung eingeschlossen ist oder die Windungen eine beispielsweise zylindrische Führung umfangsseitig einschließen, um so die Endpositionen zuverlässig definieren zu können. Hierbei kann auch ein gebogener Verlauf der Bewegung zwischen den Endpositionen vorgesehen werden.

Eine besonders vorteilhafte Ausführungsform wird auch dadurch realisiert, dass zumindest einzelne benachbarte Windungen einer jeweiligen, also derselben Spiralleitung untereinander durch ein beispielsweise als Zugmittel ausgeführtes Koppelelement verbunden sind. Dabei begrenzt das Koppelelement in der gestreckten Gebrauchsposition den maximalen Abstand der einander gegenüberliegenden Abschnitte benachbarter Windungen einer Wicklung, wobei das Koppelelement lediglich den maximalen Abstand begrenzt. Eine Funktion als Abstandhalter kann vorgesehen sein, ist jedoch nicht erforderlich. Durch die Begrenzung des maximalen Abstands der Windungen ist zugleich auch die axiale Gesamtlänge der Leitung in der gestreckten Gebrauchsposition und damit die ausgleichbare Längendifferenz begrenzt. Somit wird eine Beschädigung durch Überdehnung vermieden und zugleich eine gewünschte Stabilität der Leitung erreicht.

Die Leitung könnte als Fluidleitung für flüssige oder gasförmige Medien oder als Lichtwellenleiter ausgeführt sein. Besonders praxisgerecht ist hingegen eine Ausgestaltung der Erfindung, bei welcher die Leitung als eine elektrische Leitung ausgeführt ist, wobei selbstverständlich eine mit einer Fluidleitung und/oder Lichtwellenleiter kombinierte elektrische Leitung nicht ausgeschlossen ist und in vorteilhafter Weise realisiert werden kann.

Die Spiralleitungen können jeweils einen rohrförmigen, insbesondere metallischen Hüllkörper, beispielsweise aus einem Leichtmetall oder nicht rostenden Edelstahl, aufweisen. Eine besonders Erfolg versprechende Variante der Erfindung wird hingegen dadurch realisiert, dass die Spiralleitungen jeweils eine Ummantelung aus einem Kunststoff aufweisen, die insbesondere thermisch vorgeformt und/oder fixiert ist. So kann die jeweilige Spiralleitung je nach gewünschter Länge und Durchmesser zunächst auf einen Kern gewickelt und anschließend die einzelnen Windungen durch thermische Energiezufuhr fixiert werden. Der Kern kann anschließend problemlos entfernt werden, wobei der Kern beispielsweise auch als Rohr ausgeführt sein kann und der Zuführung eines Wärmeträgerfluids dienen kann.

Durch die so erzielte Fixierung in der vorzugsweise kompakten Gebrauchsposition sind Biegungen gegenüber der spiralförmigen Längsachse zumindest weitgehend ausgeschlossen. Vorzugsweise sind die Spiralleitungen ausschließlich durch Torsion elastisch verformbar ausgeführt, also auf eine Auslenkung in Richtung der Längsachse beschränkt.

Im Bereich einer endseitigen Aufnahme kann ein von den Spiralleitungen eingeschlossener Kern vorgesehen sein, an dessen Umfang die jeweiligen Endabschnitte der Spiralleitungen fixiert sind. Als besonders praxisgerecht hat es sich demgegenüber erwiesen, wenn die Spiralleitungen insbesondere parallel zueinander fixierte Endabschnitte aufweisen, um so die Kontaktierung durch ein Verbindungselement zu vereinfachen. Beispielsweise können die Endabschnitte parallel zueinander und/oder mit einem übereinstimmenden Abstand zu einer Mittellängsachse der Leitung angeordnet sein.

Es ist erfindungsgemäß nicht erforderlich, den Bodenbereich beim Absenken der Vorrichtung in besonderer Weise vorzubereiten, wobei eine weitgehend ebene, horizontale Fläche von Vorteil ist. Gemäß einer besonders zweckmäßigen Abwandlung der Erfindung weist die Vorrichtung ein insbesondere mit einem Bodenanker ausgestattetes Bodenelement mit einer die Leitung zumindest abschnittsweise umfangsseitig einschließenden Aufnahme auf. Das Bodenelement hat dabei einerseits die Aufgabe, eine definierte Ablagefläche zu schaffen, die mittels der Bodenanker auf dem Meeresboden in einer gewünschten Sollposition fixiert ist, und kann zudem auch einen definierten Abstand der Ablagefläche von dem Meeresboden sicherstellen. Dadurch wird die Gefahr des Einspülens der Leitung durch Sedimente verringert. Andererseits dient die beispielsweise als Korb, Sammler oder Gitterbox ausgeführte Aufnahme neben ihrer Schutzfunktion gegenüber Umgebungseinflüssen einschließlich Strömungen auch dazu, ein mögliches seitliches Abgleiten einzelner Windungen zu vermeiden, sodass die Wicklungen in ihrer konzentrischen Sollposition gesichert sind. Ein oberer Randabschnitt des Bodenelements kann dabei über die Leitung in der kompakten Gebrauchsposition hinausreichen.

Besonders bevorzugt ist die Aufnahme mit einem die Leitung in der kompakten Gebrauchsposition einschließenden Deckel verschließbar, wobei der Deckel mit einem Endabschnitt der Leitung im Gebrauch unlösbar verbunden ist, um so die eingeschlossene Leitung vor Umgebungseinflüssen optimal zu schützen und zugleich zu fixieren. Der Deckel kann in den zentralen Bereich der konzentrischen Wicklungen mit einer rotationssymmetrischen, beispielsweise kegelförmigen konvexen Ausformung hineinreichen, wenn der Deckel mit der Aufnahme verbunden ist, um die Wicklung zu stützen.

Die Leitung könnte im Gebrauch oder dauerhaft unlösbar mit dem Element verbunden ausgeführt sein. Eine andere besonders vorteilhafte Ausgestaltungsform wird auch dadurch realisiert, dass die Leitung und/oder der Deckel mit einem selbsttätig schließenden Schnellverschluss zur Verbindung mit einem Anschlusselement des Elements ausgestattet ist. Hierdurch wird zugleich die mechanische Fixierung des Elements, insbesondere also dessen Gehäuse, erleichtert, um dieses Anheben und Absenken und zugleich eine elektrische Kontaktierung der Leitung mit dem elektrischen Element zu können.

Besonders bevorzugt hat die Vorrichtung ein Positionierhilfsmittel zur einfachen relativen Orientierung oder Positionierung des Anschlusselements gegenüber der Aufnahme und/oder dem Deckel, welches beispielsweise zumindest abschnittsweise trichterförmig ausgeführt ist.

Besonders bevorzugt hat die Leitung nahezu die gleiche Dichte bzw. zumindest dieselbe Dichte wie Wasser oder ist mit zumindest einem Auftriebskörper verbunden. Damit wird die zulässige Stapellast der Leitung in der kompakten Gebrauchsposition reduziert. Die Leitung kann dadurch über erheblich mehr Spiralgänge bzw. Windungen verfügen, wodurch insbesondere auch die Gesamtlänge und der überbrückbare Höhenunterschied vergrößert wird.

Weiterhin wird die Aufgabe noch mit einer Offshore-Plattform ausgeführten Offshore-Einrichtung, insbesondere einer Windenergieanlage, mit einer mehrere elastisch verformbare, zueinander koaxiale bzw. konzentrische Spiralleitungen aufweisenden Leitung gelöst, wobei jede Spiralleitung aus einer jeweiligen Wicklung mit mehreren vorgeformten Windungen besteht, die entgegen einer Rückstellkraft relativ zueinander elastisch auslenkbar sind, wobei zumindest zwei Spiralleitungen eine gegensinnige Steigung aufweisen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Vorderansicht der erfindungsgemäßen Vorrichtung in
- Fig. 1: eine Leitung in einer kompakten Gebrauchsposition;
- Fig. 2: die Leitung in einer gestreckten Gebrauchsposition;
- Fig. 3: die auf den Meeresboden abgesenkte Leitung in der kompakten Gebrauchsposition mit einem daran angeschlossenen elektrischen Element;
- Fig. 4: die auf den Meeresboden abgesenkte Leitung in einer gestreckten Gebrauchsposition mit dem daran angeschlossenen Element in einer Überwasserposition;
- Fig. 5: die mit dem elektrischen Element unlösbar verbundene Leitung in der gestreckten Gebrauchsposition;
- Fig. 6: eine Variante der Vorrichtung mit einer kegelförmigen Leitung.

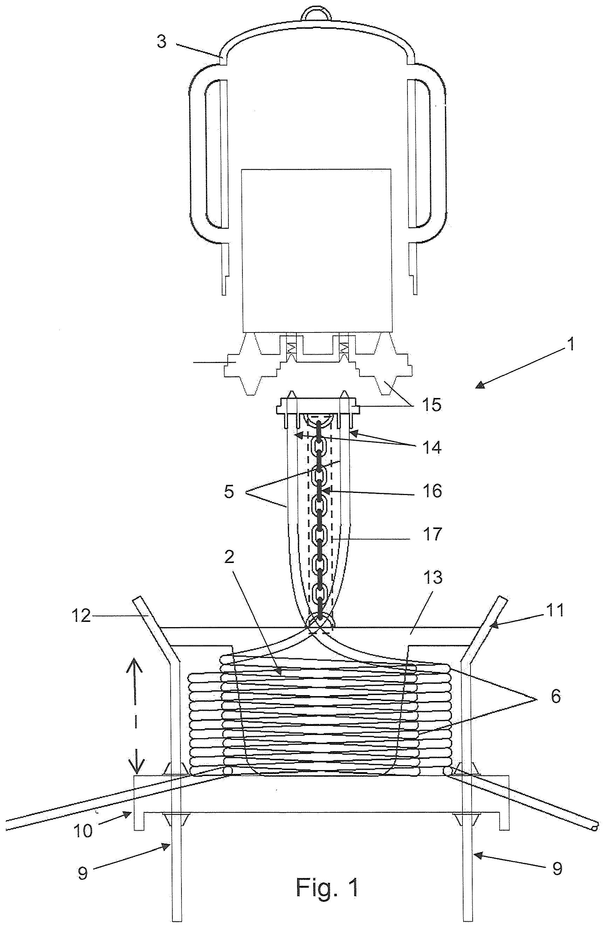

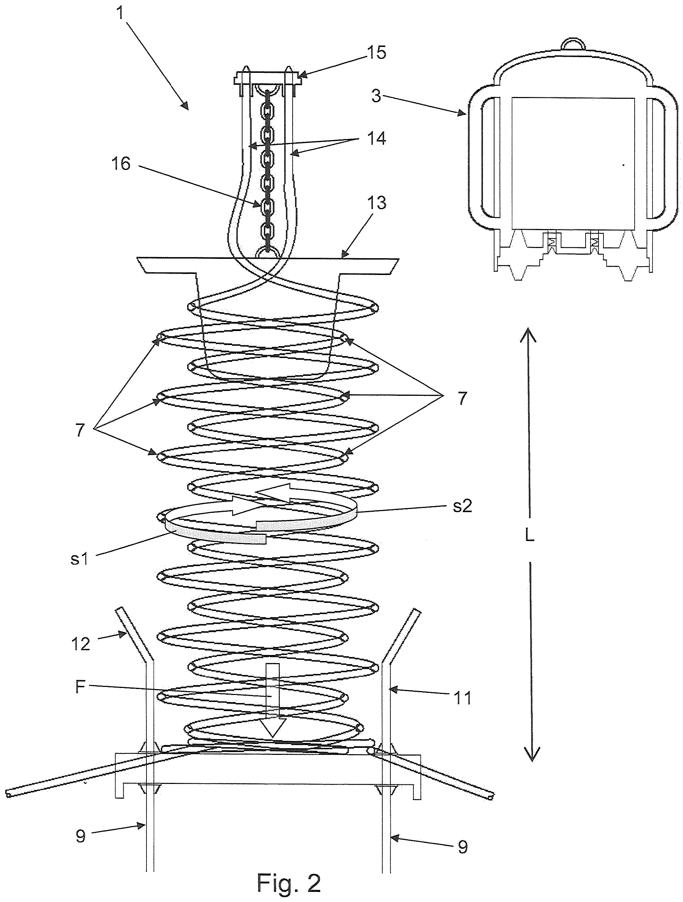

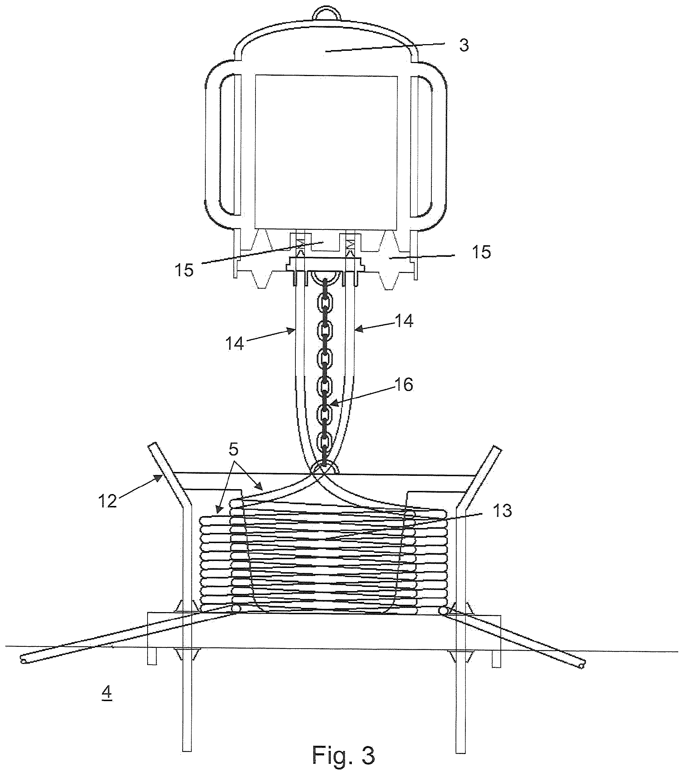

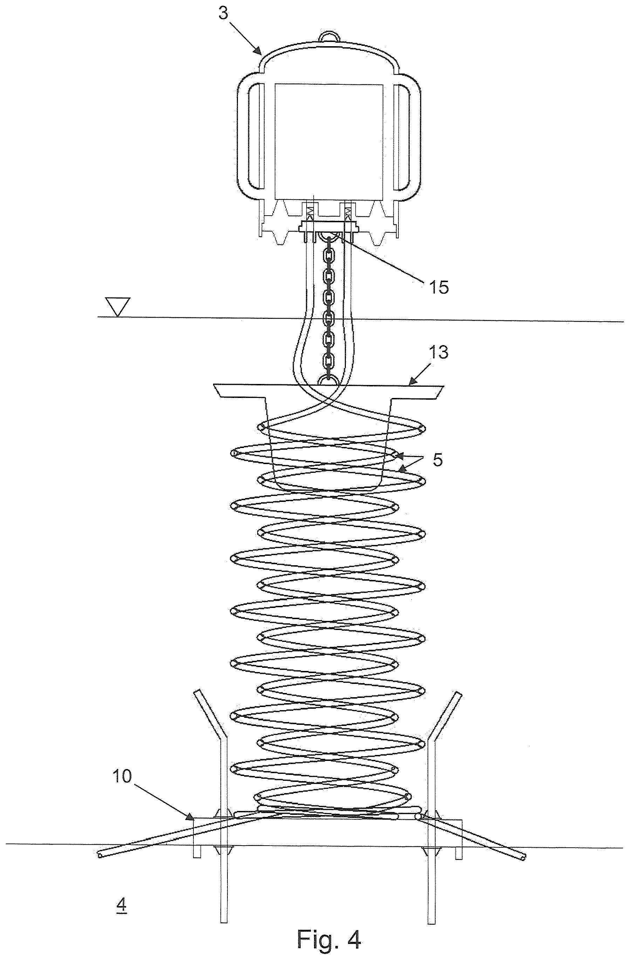

Die erfindungsgemäße für den Einsatz im Unterwasserbereich bestimmte Vorrichtung 1 wird nachstehend anhand der Figuren 1 bis 5 näher erläutert. Die Vorrichtung 1 dient dabei zum Ausgleich der Längenänderung der Länge I, L einer flexiblen Leitung 2 beim Absenken bzw. Anheben eines zu kontaktierenden elektrischen Elements 3 von einer nicht gezeigten Arbeitsplattform auf den Meeresboden 4. Hierzu nimmt die Leitung 2 einerseits, wie in den Figuren 2, 4 und 5 zu erkennen, eine gestreckte Gebrauchsposition, andererseits eine abgesenkte, kompakte Gebrauchsposition ein, wie in den Figuren 1 und 3 gezeigt. Somit dient die Vorrichtung 1 primär der einfachen Installation des elektrischen Elements 3 auf dem Meeresboden 4, wobei die Kontaktierung des elektrischen Elements 3 sowohl im Überwasserbereich auf der Plattform als auch Unterwasser erfolgen kann, sofern die Vorrichtung 1 beispielsweise bereits vorinstalliert auf dem Meeresboden 4 angeordnet ist. Darüber hinaus kann die Vorrichtung 1 aber auch zur dauerhaften Kontaktierung eines nicht gezeigten schwimmenden Körpers und dem Ausgleich der tidenabhängigen Wasserstandsschwankungen dienen.

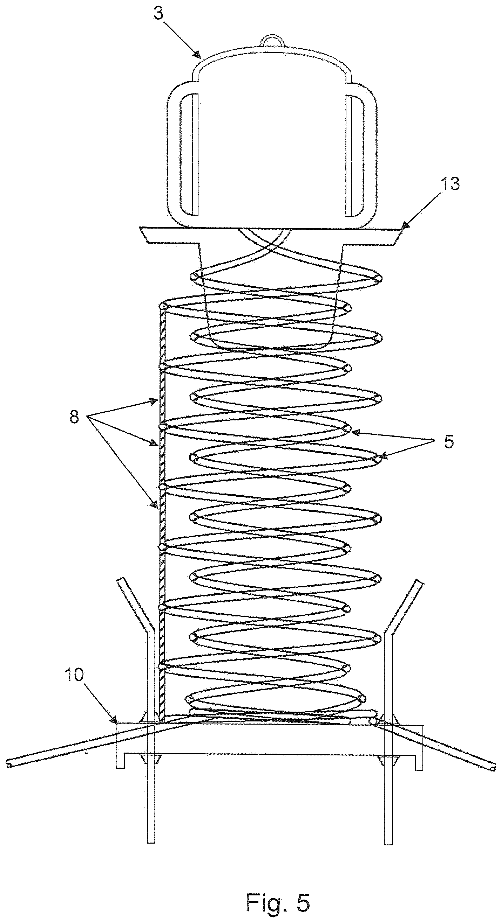

Die Leitung 2 ist nach Art einer Schraubenfeder aufgebaut und weist hierzu zwei elastisch verformbare, insbesondere tordierbare konzentrisch bzw. koaxial ineinander angeordnete Spiralleitungen 5 mit unterschiedlichem Umfang auf, wobei jede Spiralleitung 5 aus einer jeweiligen Wicklung 6 mit mehreren vorgeformten Windungen 7 besteht. Die beiden Spiralleitungen 5 weisen dabei gegensinnige Steigungen s1, s2 auf, sodass unerwünschte Drehimpulse bzw. Dralleffekte beim Übergang von der kompakten Gebrauchsposition entgegen einer Rückstellkraft F in die gestreckte Gebrauchsposition der Leitung 2 ausgeglichen werden und diese der Leitung 2 zudem auch eine ausreichende Eigensteifigkeit verleihen, wodurch sich eine definierte gestreckte Gebrauchsposition realisieren lässt. Einzelne Windungen 7 derselben Wicklung 6 sind untereinander durch ein die maximale Auslenkung begrenzendes Koppelelement 8 verbunden, wie dies lediglich beispielhaft in der Figur 5 dargestellt ist, sodass die Hubkraft nicht allein durch die Spiralleitungen 5, sondern zusätzlich auch durch die als Zugmittel ausgeführte Koppelelemente 8 übertragen wird.

Weiterhin hat die Vorrichtung 1 ein mit einem Bodenanker 9 ausgestattetes Bodenelement 10 mit einer die Leitung 2 umfangsseitig einschließenden Aufnahme 11, die mit einem trichterförmigen, als Sammler ausgeführten Positionierhilfsmittel 12 ausgestattet ist. Dieses dient als Einführhilfe eines die Aufnahme 11 verschließenden Deckels 13, wobei der Deckel 13 mit einem Endabschnitt 14 der Leitung 2 im Gebrauch unlösbar verbunden ist, und mit einem zur elektrischen und mechanischen Kontaktierung des elektrischen Elements 3 dienenden, selbsttätig verrastenden Schnellverschluss 15 ausgestattet ist. Der Schnellverschluss 15 kann hierzu als integraler Bestandteil des Deckels 13 oder, wie in den Figuren 1 bis 4 dargestellt, mit diesem durch ein Zugmittel 16 verbunden sein. Lediglich andeutungsweise ist in der Figur 1 ein das Zugmittel 16 einschließendes Stützelement 17 gezeigt, durch welches der Schnellverschluss 15 in einer definierten Relativposition zu dem Deckel 13 festgelegt ist. Eine begrenzte Flexibilität des Stützelements 17 kann vor allem im Unterwassereinsatz die Kontaktierung erleichtern.

In der Figur 5 ist ergänzend noch eine Variante dargestellt, bei der das elektrische Element 3 mit dem Deckel 13 dauerhaft verbunden ist, sodass diese stets gemeinsam zwischen einer kompakten Gebrauchsposition und einer gestreckten Gebrauchsposition beweglich ist.

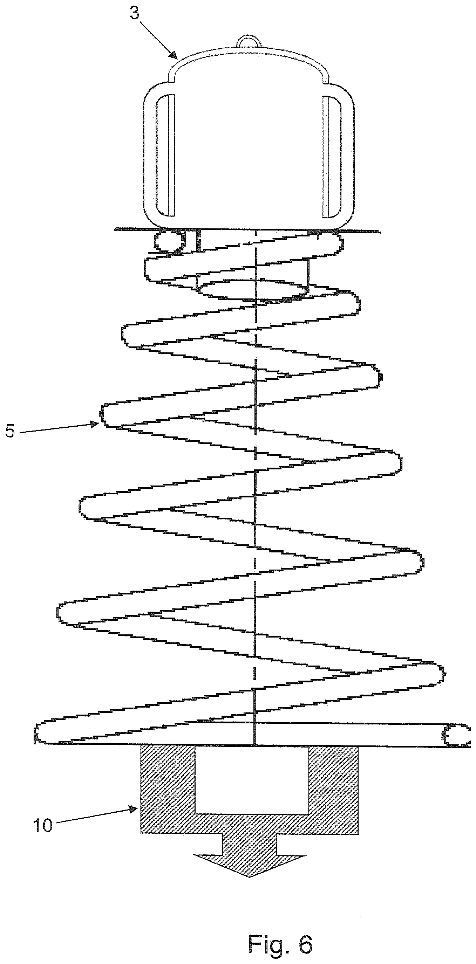

Lediglich andeutungsweise ist in der Figur 6 noch eine Variante der vorliegenden Erfindung dargestellt, bei welcher die Leitung kegelförmig bzw. konisch ausgeführt ist. Zur besseren Übersichtlichkeit ist hierbei lediglich eine Spiralleitung gezeigt.

### BEZUGSZEICHENLISTE

| | | | |
|---|---|---|---|
| 1 | Vorrichtung | 16 | Zugmittel |
| 2 | Leitung | 17 | Stützelement |
| 3 | Element | | |
| 4 | Meeresboden | I, L | Länge |
| 5 | Spiralleitung | s1, s2 | Steigung |
| | | F | Rückstellkraft |
| 6 | Wicklung | | |
| 7 | Windung | | |
| 8 | Koppelelement | | |
| 9 | Bodenanker | | |
| 10 | Bodenelement | | |
| 11 | Aufnahme | | |
| 12 | Positionierhilfsmittel | | |
| 13 | Deckel | | |
| 14 | Endabschnitt | | |
| 15 | Schnellverschluss | | |

## Patentansprüche

1. Eine für den Einsatz im Unterwasserbereich bestimmte Vorrichtung (1) zum Ausgleich der Änderung der Länge (I, L) einer mit einem Element (3) kontaktierbaren, flexiblen Leitung (2) zwischen einer kompakten Gebrauchsposition und einer gestreckten Gebrauchsposition, die Vorrichtung (1) aufweisend die Leitung (2), **dadurch gekennzeichnet, dass** die Leitung (2) zumindest zwei elastisch verformbare Spiralleitungen (5) aufweist, wobei jede Spiralleitung (5) aus einer jeweiligen Wicklung (6) mit mehreren vorgeformten Windungen (7) besteht, die entgegen einer Rückstellkraft (F) relativ zueinander elastisch auslenkbar sind, wobei zumindest zwei Spiralleitungen (5) eine gegensinnige Steigung (s1, s2) aufweisen, und die Wicklungen (6) verschiedener Spiralleitungen (5) koaxial zueinander angeordnet sind.

2. Vorrichtung (1) nach Anspruch 1, **dadurch gekennzeichnet, dass** zumindest einzelne benachbarte Windungen (7) einer jeweiligen Spiralleitung (5) durch ein Koppelelement (8) verbunden sind.

3. Vorrichtung (1) nach Anspruch 1 oder 2, **dadurch gekennzeichnet, dass** die Leitung (2) als eine elektrische Leitung ausgeführt ist.

4. Vorrichtung (1) nach zumindest einem der vorhergehenden Ansprüche, **dadurch gekennzeichnet, dass** zumindest eine Spiralleitung (5) eine Ummantelung aus einem Kunststoff, insbesondere einem Thermoplast, aufweist, und dass die Spiralleitung (5) durch die Ummantelung insbesondere thermisch vorgeformt und/oder fixiert ist.

5. Vorrichtung (1) nach zumindest einem der vorhergehenden Ansprüche, **dadurch gekennzeichnet, dass** die Spiralleitungen (5) ausschließlich durch Torsion elastisch verformbar ausgeführt sind.

6. Vorrichtung (1) nach zumindest einem der vorhergehenden Ansprüche, **dadurch gekennzeichnet, dass** die Spiralleitungen (5) insbesondere parallel zueinander fixierte Endabschnitte (14) aufweisen.

7. Vorrichtung (1) nach zumindest einem der vorhergehenden Ansprüche, **dadurch gekennzeichnet, dass** die Vorrichtung (1) ein Bodenelement (10) mit einer die Leitung (2) zumindest abschnittsweise umfangsseitig einschließenden Aufnahme (11) aufweist.

8. Vorrichtung (1) nach zumindest einem der vorhergehenden Ansprüche, **dadurch gekennzeichnet, dass** die Aufnahme (11) mit einem die Leitung (2) in der kompakten Gebrauchsposition einschließenden Deckel (13) verschließbar ist.

9. Vorrichtung (1) nach zumindest einem der vorhergehenden Ansprüche, **dadurch gekennzeichnet, dass** die Leitung (2) und/oder der Deckel (13) mit einem selbsttätig schließenden Schnellverschluss (15) zur Verbindung mit dem Element (2) ausgestattet ist.

10. Vorrichtung (1) nach zumindest einem der vorhergehenden Ansprüche, **dadurch gekennzeichnet, dass** die Leitung (2) mit einem Auftriebselement verbunden ist und/oder eine Dichte aufweist, die zumindest dem umgebenden Wasser entspricht.

11. Offshore-Einrichtung, insbesondere einer Windenergieanlage, mit einer Vorrichtung (1) nach zumindest einem der vorhergehenden Ansprüche.

## Claims

1. Device (1) intended for underwater use and serving for compensating for the change in length (1, L) of a flexible line (2), able to be made to contact an element (3), between a compact use position and an extended use position, the device (1) having the line (2), **characterized in that** the line (2) has at least two elastically deformable spiral lines (5), wherein each spiral line (5) consists of a respective winding (6) with multiple pre-formed turns (7) which are able to be deflected elastically relative to one another counter to a restoring force (F), wherein at least two spiral lines (5) have oppositely directed slopes (s1, s2), and the windings (6) of different spiral lines (5) are arranged coaxially with respect to one another.

2. Device (1) according to Claim 1, **characterized in that** at least individual adjacent turns (7) of a respective spiral line (5) are connected by a coupling element (8).

3. Device (1) according to Claim 1 or 2, **characterized in that** the line (2) is in the form of an electrical line.

4. Device (1) according to at least one of the preceding claims, **characterized in that** at least one spiral line (5) has an encapsulation composed of a plastic, in particular a thermoplastic, and **in that** the spiral line (5) is in particular thermally preformed and/or fixed by the encapsulation.

5. Device (1) according to at least one of the preceding claims, **characterized in that** the spiral lines (5) are designed to be deformable elastically exclusively by torsion.

6. Device (1) according to at least one of the preceding claims, **characterized in that** the spiral lines (5) have end portions (14) which are fixed in particular parallel to one another.

7. Device (1) according to at least one of the preceding claims, **characterized in that** the device (1) has a base element (10) with a receptacle (11), said receptacle at least sectionally circumferentially enclosing the line (2).

8. Device (1) according to at least one of the preceding claims, **characterized in that** the receptacle (11) is able to be closed off by a cover (13) which encloses the line (2) in the compact use position.

9. Device (1) according to at least one of the preceding claims, **characterized in that** the line (2) and/or the cover (13) are/is equipped with an automatically closing quick-action closure means (15) for connection to the element (2).

10. Device (1) according to at least one of the preceding claims, **characterized in that** the line (2) is connected to a buoyancy element and/or has a density that corresponds at least to the surrounding water.

11. Offshore installation, in particular a wind turbine, having a device (1) according to at least one of the preceding claims.

## Revendications

1. Dispositif (1) destiné à être utilisé en milieu sous-marin pour compenser la variation de longueur (I, L) d'un conduit flexible (2) pouvant être mis en contact avec un élément (3) entre une position d'utilisation compacte et une position d'utilisation étirée, le dispositif (1) présentant le conduit (2), **caractérisé en ce que** le conduit (2) présente au moins deux conduits en spirale (5) élastiquement déformables, chaque conduit en spirale (5) étant constitué d'un enroulement respectif (6) avec plusieurs spires préformées (7) qui peuvent être déviées élastiquement les unes par rapport aux autres à l'encontre d'une force de rappel (F), au moins deux conduits en spirale (5) présentant un pas (s1, s2) de sens opposé, et les enroulements (6) de différents conduits en spirale (5) étant agencés coaxialement les uns par rapport aux autres.

2. Dispositif (1) selon la revendication 1, **caractérisé en ce qu'**au moins des enroulements voisins individuels (7) d'un conduit en spirale respectif (5) sont reliés par un élément de couplage (8).

3. Dispositif (1) selon la revendication 1 ou 2, **caractérisé en ce que** le conduit (2) est réalisé sous la forme d'un conduit électrique.

4. Dispositif (1) selon au moins l'une quelconque des revendications précédentes, **caractérisé en ce qu'**au moins un conduit en spirale (5) présente une gaine en une matière plastique, notamment en une matière thermoplastique, et **en ce que** le conduit en spirale (5) est préformé et/ou fixé par la gaine, notamment thermiquement.

5. Dispositif (1) selon au moins l'une quelconque des revendications précédentes, **caractérisé en ce que** les conduits en spirale (5) sont réalisés de manière à pouvoir être déformés élastiquement exclusivement par torsion.

6. Dispositif (1) selon au moins l'une quelconque des revendications précédentes, **caractérisé en ce que** les conduits en spirale (5) présentent notamment des sections d'extrémité (14) fixées parallèlement les unes aux autres.

7. Dispositif (1) selon au moins l'une quelconque des revendications précédentes, **caractérisé en ce que** le dispositif (1) présente un élément de fond (10) avec un logement (11) enfermant le conduit (2) au moins par sections sur la périphérie.

8. Dispositif (1) selon au moins l'une quelconque des revendications précédentes, **caractérisé en ce que** le logement (11) peut être fermé par un couvercle (13) enfermant le conduit (2) dans la position d'utilisation compacte.

9. Dispositif (1) selon au moins l'une quelconque des revendications précédentes, **caractérisé en ce que** le conduit (2) et/ou le couvercle (13) est équipé d'une fermeture rapide (15) à fermeture automatique pour la liaison avec l'élément (2).

10. Dispositif (1) selon au moins l'une quelconque des revendications précédentes, **caractérisé en ce que** le conduit (2) est relié à un élément de flottaison et/ou présente une densité correspondant au moins à celle de l'eau environnante.

11. Installation au large, notamment d'une éolienne, avec un dispositif (1) selon au moins l'une quelconque des revendications précédentes.
